# FASCICULE DE BREVET EUROPEEN

(11) **EP 2 381 072 B1**
(45) Date de publication et mention de la délivrance du brevet: **11.05.2016**
(21) Numéro de dépôt: 11290144.2
(22) Date de dépôt: 22.03.2011
(51) Int. Cl.: F01K 15/00, F01N 5/02

(54) **Circuit fermé fonctionnant selon un cycle de rankine et procede utilisant un tel circuit**
nach einem Rankine-Zyklus arbeitender geschlossener Kühlmittelkreislauf und Verfahren zum Benutzen eines solchen Kreislaufes
Closed circuit operating according to a Rankine cycle and method using such a circuit

(30) Priorité: 22.04.2010 FR 1001716
(43) Date de publication de la demande: 26.10.2011
(73) Titulaire: IFP Énergies nouvelles, 92852 Rueil-Malmaison Cedex (FR)
(72) Inventeur: Ternel, Cyprien, 92310 Sevres (FR)

(56) Documents cités:
- EP-A2- 1 564 822
- WO-A1-2006/066347
- DE-A1-102006 043 139
- US-B1- 6 367 261

## Description

La présente invention se rapporte à un circuit fermé fonctionnant selon un cycle de Rankine.

Elle vise plus particulièrement un tel circuit avec un dispositif permettant de récupérer l'énergie calorifique provenant de ce circuit et de la transformer en une autre énergie.

Comme cela est connu, le cycle de Rankine est un cycle thermodynamique à circuit fermé ayant pour particularité de faire appel à un changement de phase (liquide/vapeur) d'un fluide de travail.

Ce cycle se décompose généralement en une étape durant laquelle le fluide de travail utilisé, généralement de l'eau sous forme liquide, est comprimée de manière isentropique, suivie d'une étape où cette eau liquide comprimée est chauffée et vaporisée au contact d'une source de chaleur. Cette vapeur d'eau est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend un compresseur pour comprimer l'eau sous forme liquide, un évaporateur qui est balayé par un fluide chaud pour réaliser la vaporisation au moins partielle de l'eau comprimé, une machine de détente pour détendre la vapeur, telle qu'une turbine, qui transforme l'énergie de cette vapeur en une autre énergie, comme une énergie mécanique ou électrique, et un condenseur grâce auquel la chaleur contenue dans la vapeur est cédée à une source froide, généralement de l'air extérieur qui balaye ce condenseur, pour transformer cette vapeur en de l'eau sous forme liquide.

Il est également connu, notamment par le document FR 2 884 555, d'utiliser l'énergie calorifique véhiculée par les gaz d'échappement d'un moteur à combustion interne, en particulier celui utilisé pour des véhicules automobiles, comme source chaude pour assurer le chauffage et la vaporisation du fluide traversant l'évaporateur.

Ceci permet d'améliorer l'efficacité énergétique de ce moteur en récupérant une grande partie de l'énergie perdue à l'échappement pour la transformer en une énergie qui peut être utilisée pour le véhicule automobile au travers du circuit à cycle de Rankine.

En outre, dans ce circuit, la chaleur contenue dans la vapeur d'eau est cédée à l'air extérieur qui balaye le condenseur pour transformer cette vapeur en de l'eau sous forme liquide. Lors de cet échange, la vapeur d'eau cède de l'énergie thermique calorifique à cet air, cet air chaud est ensuite évacué directement dans l'atmosphère.

De ce fait, une grande quantité d'énergie calorifique est perdue alors qu'elle pourrait être utilisée à bon escient.

Il est connu par le document US-6367261 de récupérer une partie de cette énergie calorifique perdue pour la transormer en energie électrique.

La présente invention se propose de remédier aux inconvénients ci-dessus grâce à un circuit et à un procédé qui permettent de récupérer tout ou une majeure partie de l'énergie calorifique pour la transformer en une énergie facilement utilisable, comme de l'énergie électrique.

A cet effet, l'invention concerne un circuit fermé fonctionnant selon un cycle de Rankine comprenant une pompe de circulation et de compression d'un fluide de travail sous forme liquide, un échangeur de chaleur balayé par une source chaude pour l'évaporation dudit fluide, des moyens de détente du fluide sous forme vapeur, et un échangeur de refroidissement pour la condensation de ce fluide et traversé par un fluide de refroidissement entre une face d'entrée et une face de sortie, caractérisé en ce qu'il comprend des thermopiles pour capter et transformer l'énergie calorifique provenant de l'échangeur de refroidissement en une énergie électrique et en ce que lesdites thermopiles sont placées dans le flux du fluide de refroidissement chauffé provenant de la face de sortie de l'échangeur de refroidissement.

Les thermopiles peuvent être placées sur la face de sortie de l'échangeur de refroidissement.

Le fluide de refroidissement peut être de l'air ou de l'eau.

La source chaude peut provenir des gaz d'échappement d'un moteur à combustion interne.

L'invention concerne également un procédé utilisant un circuit fermé fonctionnant selon un cycle de Rankine, ledit circuit comprenant une pompe de circulation et de compression d'un fluide de travail sous forme liquide, un échangeur de chaleur balayé par une source chaude pour l'évaporation dudit fluide, des moyens de détente du fluide sous forme vapeur, et un échangeur de refroidissement balayé par un fluide de refroidissement entre sa face d'entrée et sa face de sortie pour la condensation de ce fluide, caractérisé en ce qu'il consiste, pendant le fonctionnement du circuit, à capter, par des thermopiles placées dans le flux du fluide de refroidissement chauffé provenant de la face de sortie de l'échangeur de refroidissement, l'énergie calorifique provenant dudit échangeur pour la transformer en une énergie électrique.

Le procédé peut consister à utiliser l'énergie calorifique des gaz d'échappement d'un moteur à combustion interne pour la source chaude balayant l'échangeur de chaleur.

Les autres caractéristiques et avantages de l'invention vont apparaître à la lecture de la description qui va suivre, donnée à titre uniquement illustratif et non limitatif, et à laquelle est annexée la figure unique qui montre un dispositif de récupération d'énergie calorifique provenant d'un circuit fermé fonctionnant selon un cycle de Rankine.

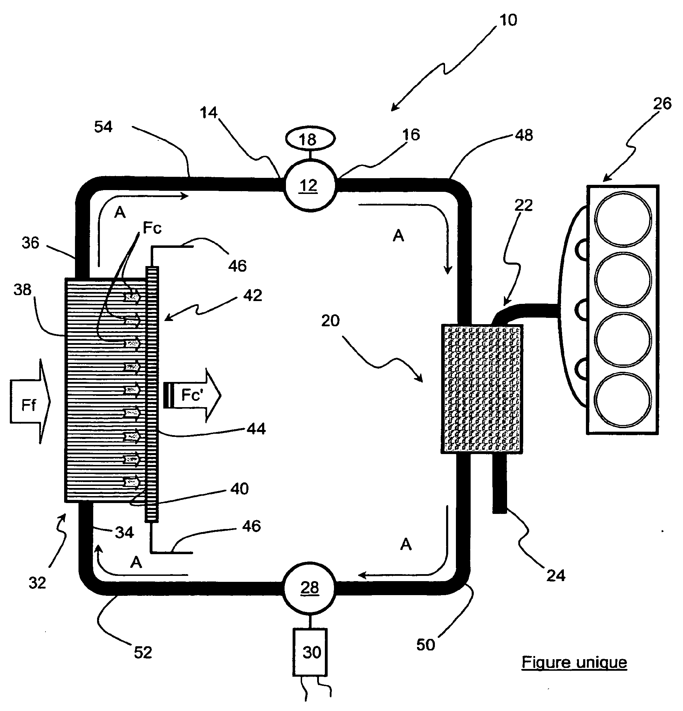

Sur la figure 1, le circuit fermé à cycle de Rankine 10 comprend un moyen de circulation et de compression 12 d'un fluide de travail, ici de l'eau, circulant dans ce circuit selon un sens horaire (Flèches A). Ce moyen, dénommé compresseur dans la suite de la description, permet de comprimer cette eau entre une entrée 14 et une sortie 16 où cette eau, toujours sous forme liquide, est à pression élevée.

Ce compresseur est avantageusement entraîné en rotation tous moyens connus, comme par un moteur électrique 18.

Ce circuit comporte aussi un échangeur de chaleur 20, dénommé évaporateur, traversé par l'eau comprimé d'où elle ressort sous forme de vapeur comprimée.

Cet évaporateur est balayé par une source chaude 22 provenant des gaz d'échappement circulant dans la ligne d'échappement 24 d'un moteur à combustion interne 26.

Avantageusement, ce moteur est un moteur à combustion interne d'un véhicule automobile.

Ce circuit comporte également un dispositif de détente 28, ou détendeur, recevant à son admission la vapeur d'eau comprimée à haute pression et à partir duquel la vapeur d'eau ressort sous forme de vapeur détendue à basse pression.

A titre d'exemple, ce détendeur est une turbine de détente dont le rotor (non représenté) est entraîné en rotation par la vapeur d'eau. Ce rotor est avantageusement relié à un tout dispositif connu permettant de transformer l'énergie mécanique récupérée en une autre énergie, comme par exemple une génératrice électrique 30.

Le circuit comporte encore un échangeur de refroidissement 32, appelée condenseur dans la suite de la description, avec une entrée 34 pour la vapeur basse pression détendue et une sortie 36 pour la vapeur transformée en eau sous forme liquide après son passage dans ce condenseur. Ce condenseur est, ici à titre d'exemple, un échangeur de type tubes-ailettes dans lequel la vapeur circule dans les tubes et dans lequel un fluide de refroidissement balaye les tubes et les ailettes. Avantageusement, ce condenseur échangeur forme un ensemble parallélépipédique avec une face d'entrée 38 en regard d'un fluide de refroidissement Ff et une face de sortie 40 à partir de laquelle le fluide de refroidissement chauffée est évacué de ce condenseur.

Dans le cas de l'exemple décrit, ce fluide de refroidissement est de l'air extérieur à température ambiante qui traverse le condenseur entre sa face d'entrée 38 et sa face de sortie 40 en refroidissant la vapeur détendue. Ce refroidissement a pour effet de condenser cette vapeur et de la transformer en un liquide à la sortie 36 du condenseur. Ainsi, de par l'échange thermique entre la vapeur et l'air, ce dernier capte l'énergie calorifique contenue dans cette vapeur et aboutit à la face 40 du condenseur selon un flux d'air chaud (représenté sur la figure par une multiplicité de flèches Fc).

Bien entendu, tout autre fluide de refroidissement, comme de l'eau, peut être utilisé pour assurer la condensation de la vapeur.

Ce circuit comporte en outre des moyens de transformation de l'énergie calorifique 42 fournie par le condenseur. Plus particulièrement, ces moyens permettent de récupérer l'énergie calorifique contenue dans le flux d'air chaud et de la transformer en une autre énergie, comme une énergie mécanique ou une énergie électrique.

Avantageusement, ces moyens de transformation comprennent une succession de thermopiles 44 placées dans le flux d'air chaud Fc et permettant d'obtenir une énergie électrique à partir de l'énergie calorifique du condenseur.

Plus particulièrement, ces thermopiles sont placées sur la face de sortie 40 de ce condenseur ou à proximité de celle-ci sans pour cela gêner la circulation de l'air entre ses faces d'entrée et de sortie.

Sans sortir du cadre de l'invention, ces thermopiles peuvent être des éléments incorporés à l'intérieur du condenseur ou être des éléments constitutifs de ce condenseur.

Ces thermopiles ont pour effet de transformer in situ la chaleur qu'elles captent en une énergie électrique, notamment par effet Seebeck. Cette énergie électrique est ensuite utilisable au travers de conducteurs électriques 46 connectés à ces thermopiles.

Des conduites de circulation de fluide 48, 50, 52, 54 permettent de relier successivement les différents éléments de ce circuit pour que le fluide de travail, sous forme liquide ou sous forme vapeur, circule selon le sens indiqué par les flèches.

Ainsi de manière avantageuse, l'ensemble formé par le circuit 10 avec le dispositif de récupération d'énergie calorifique et de transformation en énergie électrique 42, et par le moteur à combustion interne 26 avec sa ligne d'échappement 24 équipe avantageusement un véhicule automobile.

En fonctionnement, l'eau circule dans le circuit selon un sens horaire en considérant la figure (flèches A) sous l'effet du compresseur 12 entrainé en rotation par son moteur électrique 18.

Dans cette configuration, l'eau sort du compresseur 12 sous forme d'eau liquide comprimée avec une pression de l'ordre de 10 bars et une température voisine de 30°. Cette eau comprimée circule dans la conduite 48 pour aboutir à l'évaporateur 20. Cette eau comprimée traverse l'évaporateur 20 pour être, en sortie de cet évaporateur, sous forme de vapeur comprimée à haute pression et à une température d'environs 300°C. Cette vaporisation se réalise sous l'effet de la chaleur provenant des gaz d'échappement du moteur 26 et balayant l'évaporateur. La vapeur d'eau traverse ensuite le détendeur 28 en lui transmettant l'énergie qu'elle contient, cette énergie étant utilisée pour entraîner la génératrice 30. La vapeur d'eau détendue, qui sort de ce détendeur, traverse le condenseur 32 dans lequel elle ressort en une eau liquide. Cette eau liquide est ensuite amenée par la conduite 54 au compresseur 12 pour y être comprimée.

Lors de son passage au travers du condenseur, la vapeur est à environ 100°C à l'entrée 34 et ressort par la sortie 36 en grande partie sous forme liquide à une température de 30°C. Durant ce passage, les calories contenues dans cette vapeur ont été captées par l'air froid (flèche Ff) qui balaye ce condenseur entre sa face d'entrée 32 et sa face de sortie 40. Cet air ce réchauffe au fur et à mesure de son cheminement dans le condenseur pour arriver à la face de sortie 40 sous la forme d'un flux d'air chauffé Fc par la vapeur.

De par la présence des thermopiles 44, l'air chaud (flèches Fc) traverse ces thermopiles en leur cédant une grande partie de son énergie calorifique pour aboutir, après cette traversée, à un flux d'air Fc' qui est à une température inférieure au flux d'air chaud Fc.

La chaleur ainsi captée est ensuite transformée en énergie électrique par ces thermopiles.

Cette énergie électrique est transportée par les conducteurs 46 vers tout dispositif utilisateur de courant, comme des batteries ou des accessoires du véhicule automobile.

Il est à noter que la vapeur d'eau qui entre dans le condenseur est à une température quasiment invariable (de l'ordre de quelques degrés autour de 100°C). Ceci permet d'utiliser des thermopiles avec une zone de rendement maximale sur une courte plage de température d'air chaud.

## Revendications

1. Circuit fermé fonctionnant selon un cycle de Rankine comprenant une pompe de circulation et de compression (12) d'un fluide de travail sous forme liquide, un échangeur de chaleur (20) balayé par une source chaude (22) pour l'évaporation dudit fluide, des moyens de détente (28) du fluide sous forme vapeur, un échangeur de refroidissement (32) pour la condensation de ce fluide et traversé par un fluide de refroidissement entre une face d'entrée (38) et une face de sortie (40), et des thermopiles (42) pour capter et transformer (42) l'énergie calorifique provenant de l'échangeur de refroidissement (32) en une énergie électrique **caractérisé en ce que** lesdites thermopiles sont placées dans le flux du fluide de refroidissement chauffé provenant de la face de sortie (40) de l'échangeur de refroidissement.

2. Circuit selon la revendication 1, **caractérisé en ce que** les thermopiles (44) sont placées sur la face de sortie (40) de l'échangeur de refroidissement.

3. Circuit selon l'une des revendications précédentes, **caractérisé en ce que** le fluide de refroidissement est de l'air.

4. Circuit selon l'une des revendications 1 à 2, **caractérisé en ce que** le fluide de refroidissement est de l'eau.

5. Circuit selon la revendication 1, **caractérisé en ce que** la source chaude (22) provient des gaz d'échappement d'un moteur à combustion interne (26).

6. Procédé utilisant un circuit fermé (10) fonctionnant selon un cycle de Rankine, ledit circuit comprenant une pompe de circulation et de compression (12) d'un fluide de travail sous forme liquide, un échangeur de chaleur (20) balayé par une source chaude (22) pour l'évaporation dudit fluide, des moyens de détente (28) du fluide sous forme vapeur, et un échangeur de refroidissement (38) balayé par un fluide de refroidissement entre sa face d'entrée (38) et sa face de sortie (40) pour la condensation de ce fluide, **caractérisé en ce qu'**il consiste, pendant le fonctionnement du circuit, à capter, par des thermopiles (42) placées dans le flux du fluide de refroidissement chauffé provenant de la face de sortie (40) de l'échangeur de refroidissement, l'énergie calorifique provenant dudit échangeur pour la transformer en une énergie électrique.

7. Procédé selon la revendication 6, **caractérisé en ce qu'**il consiste à utiliser l'énergie calorifique des gaz d'échappement d'un moteur à combustion interne (26) pour la source chaude balayant l'échangeur de chaleur (20).

## Patentansprüche

1. Nach einem Rankine-Kreisprozess funktionierender, geschlossener Kreislauf umfassend eine Zirkulations- und Kompressionspumpe(12) eines Arbeitsfluides in flüssiger Form, einen Wärmetauscher (20) durchspült von einer Wärmequelle (22) zur Verdampfung des Fluides, Mittel zum Entspannen (28) des Fluides in Gasform, einen kühlenden Wärmetauscher (32) zur Kondensation des Fluides und durchströmt von einem Kühlfluid zwischen einer Eintrittsseite (38) und einer Austrittsseite (40) und Thermosäulen (42) zum Einfangen und Transformieren der kalorischen Energie, entstammend aus dem kühlenden Wärmetauscher (32), in eine elektrische Energie, **dadurch gekennzeichnet, dass** die Thermosäulen im erwärmten Kühlfluidstrom angeordnet sind, der von der Ausgangsseite (40) des kühlenden Wärmetauschers stammend ist.

2. Kreislauf gemäß Anspruch 1, **dadurch gekennzeichnet, dass** die Thermosäulen (44) auf der Austrittsseite des kühlenden Wärmetauschers (42) angeordnet sind.

3. Kreislauf gemäß einem der vorherigen Ansprüche, **dadurch gekennzeichnet, dass** das Kühlfluid Luft ist.

4. Kreislauf gemäß einem der vorherigen Ansprüche, **dadurch gekennzeichnet, dass** das Kühlfluid Wasser ist.

5. Kreislauf gemäß einem der vorherigen Ansprüche, **dadurch gekennzeichnet, dass** die Wärmequelle (22) aus dem Abgas eines internen Verbrennungsmotors (26) hervorgehend ist.

6. Verfahren unter Verwendung eines nach einem Rankine-Kreisprozess funktionierenden, geschlossenen Kreislaufs (10), wobei der Kreislauf eine Zirkulations- und Kompressionspumpe(12) eines Arbeitsfluides in flüssiger Form umfasst, einen Wärmetauscher (20) durchspült von einer Wärmequelle (22) zur Verdampfung des Fluides, Mittel zum Entspannen (28) des Fluides in Gasform, und kühlenden Wärmetauscher (38?; should read 32!) zur Kondensation des Fluids durchspült von einem Kühlfluid zwischen seiner Eintrittsseite (38) und seiner Austrittsseite (40), **dadurch gekennzeichnet, dass** es daraus besteht, während des Betriebs des Kreislaufs, die aus dem genannten Wärmetauscher hervorgehende kalorische Energie mittels der, im Strom des erwärmten Kühlfluids, welches aus der Ausgangsseite (40) des kühlenden Wärmetauschers entstammt, angeordneten Thermosäulen (42) einzufangen, um sie in eine elektrische Energie umzuwandeln.

7. Verfahren gemäß Anspruch 6, **dadurch gekennzeichnet, dass** es daraus besteht, die kalorische Energie eines Abgases eines internen Verbrennungsmotors (26) als den Wärmetauscher (20) durchströmende Wärmequelle zu nutzen.

## Claims

1. A closed loop operating on a Rankine cycle, comprising a circulation and compression pump (12) for a working fluid in liquid form, a heat exchanger (20) swept by a hot source (22) for evaporation of said fluid, expansion means (28) for expanding the fluid in vapour form, a cooling exchanger (32) for condensation of this fluid and traversed by a cooling fluid between an inlet face (38) and an outlet face (40), and thermopiles (42) for capturing and converting (42) the calorific energy from cooling exchanger (32) to electric energy, **characterized in that** said thermopiles are arranged in the heated cooling fluid stream coming from outlet face (40) of the cooling exchanger.

2. A loop as claimed in claim 1, **characterized in that** thermopiles (44) are arranged on outlet face (40) of the cooling exchanger.

3. A loop as claimed in any one of the previous claims, **characterized in that** the cooling fluid is air.

4. A loop as claimed in any one of claims 1 to 2, **characterized in that** the cooling fluid is water.

5. A loop as claimed in claim 1, **characterized in that** hot source (22) comes from the exhaust gas of an internal-combustion engine (26).

6. A method using a closed loop (10) operating on a Rankine cycle, said loop comprising a circulation and compression pump (12) for a working fluid in liquid form, a heat exchanger (20) swept by a hot source (22) for evaporation of said fluid, expansion means (28) for expanding the fluid in vapour form and a cooling exchanger (38) swept by a cooling fluid between inlet face (38) and outlet face (40) thereof for condensation of this fluid, **characterized in that** it consists, during operation of the loop, in capturing, by means of thermopiles (42) arranged in the heated cooling fluid stream coming from outlet face (40) of the cooling exchanger, the calorific energy from said exchanger so as to convert it to electric energy.

7. A method as claimed in claim 6, **characterized in that** it consists in using the calorific energy of the exhaust gas of an internal-combustion engine (26) for the hot source sweeping heat exchanger (20).
